# FASCICULE DE BREVET EUROPEEN

(11) **EP 3 041 715 B1**
(45) Date de publication et mention de la délivrance du brevet: **10.10.2018**
(21) Numéro de dépôt: 14759165.5
(22) Date de dépôt: 03.09.2014
(51) Int. Cl.: B60R 25/021

(54) **ANTIVOL POUR COLONNE DE DIRECTION DE VEHICULE AUTOMOBILE**
DIEBSTAHLSCHUTZVORRICHTUNG FÜR DIE LENKSÄULE EINES KRAFTFAHRZEUGS
ANTI-THEFT DEVICE FOR A STEERING COLUMN OF A MOTOR VEHICLE

(30) Priorité: 04.09.2013 FR 1358452
(43) Date de publication de la demande: 13.07.2016
(73) Titulaire: U-Shin France, 94000 Créteil (FR)
(72) Inventeur: DELLA FIORENTINA, Alix, F-94046 Creteil Cedex (FR); PICHELIN, Nicolas, F-94046 Creteil Cedex (FR); POGGI, Patrice, F-94046 Creteil Cedex (FR)
(74) Mandataire: Gaillarde, Frédéric F. Ch.
(86) Numéro de dépôt international: PCT/EP2014/068762
(87) Numéro de publication internationale: WO 2015/032832

(56) Documents cités:
- FR-A1- 2 967 115
- US-A- 4 516 415
- US-A- 5 289 707

## Description

### DOMAINE TECHNIQUE

La présente invention concerne le domaine des verrous et antivols pour colonne de direction de véhicules automobiles.

### ETAT DE LA TECHNIQUE

Le moyen de verrouillage des antivols comporte un pêne monté mobile entre une position escamotée dans laquelle le pêne est maintenu à distance d'une colonne de direction et une position de saillie dans laquelle il bloque la colonne de direction du véhicule automobile. La clef conforme au verrou permet de décondamner le moyen de verrouillage du véhicule automobile.

Dans une version perfectionnée de ce dispositif, la clé ne peut pas être extraite du verrou par un simple mouvement de retrait en position d'arrêt. Il est nécessaire d'enfoncer préalablement la clé dans le verrou pour pouvoir ensuite l'en extraire. On prévient ainsi toute extraction intempestive ou malveillante de la clé, notamment en raison du danger que l'extraction de la clé représente lorsque le véhicule est en marche. En particulier, on évite qu'un enfant transporté sur un siège avant du véhicule puisse saisir la clé pendant le transport.

Néanmoins, les mécanismes prévus à ce jour pour obtenir les fonctionnalités précitées sont relativement compliqués à assembler et coûteux.

Les documents US 5 289 707 A et FR 2 967 115 A1 divulguent également des verrous et antivols pour colonne de direction de véhicule automobile selon l'art antérieur.

### EXPOSE DE L'INVENTION

Un but de l'invention est de fournir un mécanisme plus simple à assembler et moins coûteux pour l'obtention de ces fonctionnalités.

A cet effet, la présente invention a pour objet un verrou pour antivol de colonne de direction de véhicule automobile comportant :
- un rotor,
- une tête de stator,
- un ergot et un profil complémentaire, l'un porté par le rotor et l'autre par la tête de stator, le profil complémentaire étant conformé pour que sa coopération avec l'ergot bloque la rotation du rotor dans un sens de rotation prédéterminé à partir d'une position angulaire prédéterminée et autorise la rotation du rotor par enfoncement préalable du rotor,
caractérisé en ce que le profil complémentaire est également conformé pour que la coopération entre le profil complémentaire et l'ergot guide le montage du rotor dans la tête de stator selon un assemblage du type poussé-tourné dans lequel le rotor est axialement retenu dans la tête de stator.

Ainsi, on utilise le même ergot pour deux fonctions distinctes : l'ergot coopère avec le profil complémentaire pour forcer le conducteur à enfoncer le rotor préalablement au retrait de la clé tandis que l'ergot coopère avec le profil complémentaire pour le montage simple du rotor dans la tête de stator. On obtient ainsi de façon simple et à moindre coûts, deux fonctionnalités distinctes.

En outre, le verrou présente un encombrement réduit par rapport à ceux de l'état de la technique.

Selon un exemple de réalisation, le verrou comporte un élément élastique configuré pour solliciter axialement le rotor en poussée.

Selon un exemple de réalisation, l'ergot ou le profil complémentaire est agencé du côté de la tête du rotor destinée à recevoir la clé.

Selon un exemple de réalisation, l'ergot est porté par la tête de stator et le profil complémentaire est porté par le rotor. En effet, la réalisation du profil complémentaire en périphérie externe du rotor, par exemple par injection, est plus facile à réaliser qu'en périphérie interne de la tête de stator.

Selon un exemple de réalisation, le profil complémentaire présente :
- une rainure d'entrée axiale, débouchant à une extrémité du rotor, et
- une rainure latérale en communication avec la rainure d'entrée, la rainure latérale présentant une butée axiale pour retenir axialement le rotor dans la tête de stator par coopération avec l'ergot.

Selon un exemple de réalisation, la rainure d'entrée est agencée pour coopérer avec l'ergot dans une position angulaire du rotor distincte des positions angulaires que peut prendre le rotor par entraînement en rotation d'une clé.

Selon un exemple de réalisation, la rainure latérale comporte une portion conformée en rampe d'enfoncement pour enfoncer axialement le rotor dans la tête de stator par coopération avec l'ergot lors de la rotation du rotor dans la tête de stator dans un sens de rotation contraire au sens de rotation prédéterminé et la butée axiale comporte une portion en retrait axial à l'opposé de la portion conformée en rampe d'enfoncement.

Selon un exemple de réalisation, la rainure latérale comporte une butée radiale pour bloquer la rotation du rotor par coopération avec l'ergot, lors de la rotation du rotor dans le sens de rotation prédéterminé à partir de la position angulaire prédéterminée.

Selon un exemple de réalisation, la position angulaire prédéterminée est une position intermédiaire.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
- la figure 1 représente une vue en perspective d'un antivol de colonne de direction de véhicule automobile,
- la figure 2 représente une vue en éclaté du verrou de l'antivol de la figure 1,
- la figure 3 représente une vue en coupe de la tête de stator du verrou de la figure 2 ainsi qu'une vue en agrandie de l'ergot de la tête de stator,
- la figure 4 représente une vue partielle en perspective de l'extrémité avant du rotor du verrou de la figure 2,
- la figure 5 représente une vue en perspective de côté de l'extrémité avant du rotor de la figure 4,
- la figure 6 représente une vue partielle en perspective de l'extrémité avant du rotor de la figure 5 ayant tourné d'environ 180°,
- la figure 7 représente une vue agrandie d'éléments du verrou de la figure 2 à l'état assemblé, la tête de stator étant représentée en transparence avec le rotor en position neutre,
- la figure 8 représente une vue analogue à la figure 7, lorsqu'une clé est introduite dans le verrou et que le rotor commence à tourner,
- la figure 9 représente une vue analogue à la figure 8, le rotor tournant en s'enfonçant,
- la figure 10 représente une vue analogue à la figure 9 avec le rotor en position enfoncée,
- la figure 11 représente une vue analogue à la figure 10, le rotor continuant de tourner,
- la figure 12 représente une vue analogue à la figure 11 avec le rotor en position intermédiaire,
- la figure 13 représente une vue analogue à la figure 12, le rotor étant bloqué en rotation,
- la figure 14 représente une vue analogue à la figure 13, le conducteur appuyant sur le rotor, et
- la figure 15 représente une vue analogue à la figure 14, le rotor étant rappelé en position non enfoncée.

Sur ces figures, les éléments identiques portent les mêmes numéros de référence.

### DESCRIPTION DÉTAILLÉE

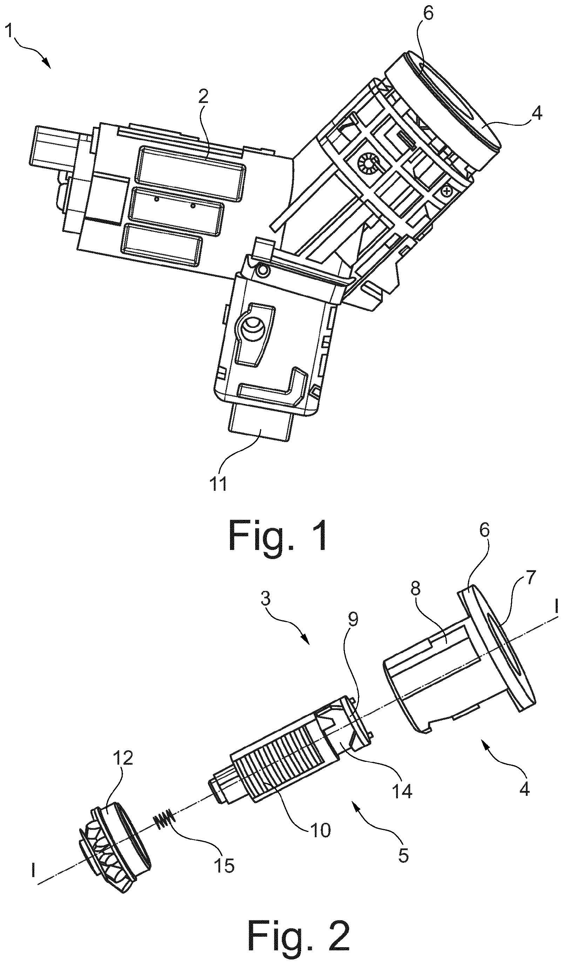

La figure 1 illustre un antivol 1, à verrou insérable, destiné à être monté dans un véhicule automobile pour en sécuriser la direction. L'antivol 1 comporte un corps d'antivol 2 à l'intérieur duquel un verrou 3 est destiné à être inséré et solidarisé.

Comme on peut mieux le voir sur la figure 2, le verrou 3 comporte une tête de stator 4 à l'intérieur de laquelle un rotor 5 est susceptible d'être mobile en rotation axiale autour de l'axe de rotation I-I par entraînement en rotation d'une clé pour commander un moyen de verrouillage de l'antivol 1.

La tête de stator 4 est destinée à être solidarisée au corps d'antivol 2. A l'avant, la tête de stator 4 présente un cache 6 dans lequel est ménagée une ouverture circulaire 7 pour permettre l'accès à la tête du rotor 5. A l'arrière du cache 6, la tête de stator 4 présente un logement 8 par exemple de forme générale cylindrique pour recevoir le rotor 5.

Le rotor 5 présente une entrée de clé 9 ménagée à l'extrémité avant (ou tête). Il est entendu que, dans l'ensemble de ce texte, le terme rotor désigne très généralement tout sous-ensemble comprenant un corps de rotor à travers lequel sont ménagés des fentes radiales 10 à même de recevoir des paillettes qui sont montées mobiles en translation radiale et qui sont couplées à des ressorts de rappel les entraînant en permanence dans des positions saillantes par rapport au corps du rotor.

Selon un exemple de réalisation, la rotation de la clé est susceptible d'entraîner la rotation du rotor 5 dans une première position angulaire extrême neutre, dite position neutre, comme la position « stop », deux positions angulaires intermédiaires, dites positions « marche » et « accessoires » et une deuxième position angulaire extrême, opposée à la première position angulaire extrême neutre, dite position « démarrage ».

Les positions neutre, intermédiaires et démarrage se succèdent lorsque le rotor 5 est déplacé de la position neutre vers la position démarrage. Après son passage par la position démarrage, le rotor 5 est élastiquement ramenée par un ressort de rappel vers sa position intermédiaire marche.

Le moyen de verrouillage comporte un pêne 11 monté mobile entre une position escamotée dans laquelle le pêne 11 est maintenu à distance d'une colonne de direction (non représentée) et une position de saillie (figure 1) dans laquelle il bloque la colonne de direction du véhicule automobile.

Pour cela, le verrou 3 comporte une came 12, solidaire en rotation du rotor 5 (figure 2), de sorte que la rotation du rotor 5 permette de contrôler la translation du pêne 11.

Le pêne 11 est généralement en position de saillie dans la colonne de direction lorsque le rotor 5 est en position neutre et la clef retirée du rotor 5, le pêne 11 étant maintenu rentré, en position escamotée, dans les autres positions angulaires du rotor 5. Le pêne 11 est sollicité en poussé en position de saillie par un ressort de pêne.

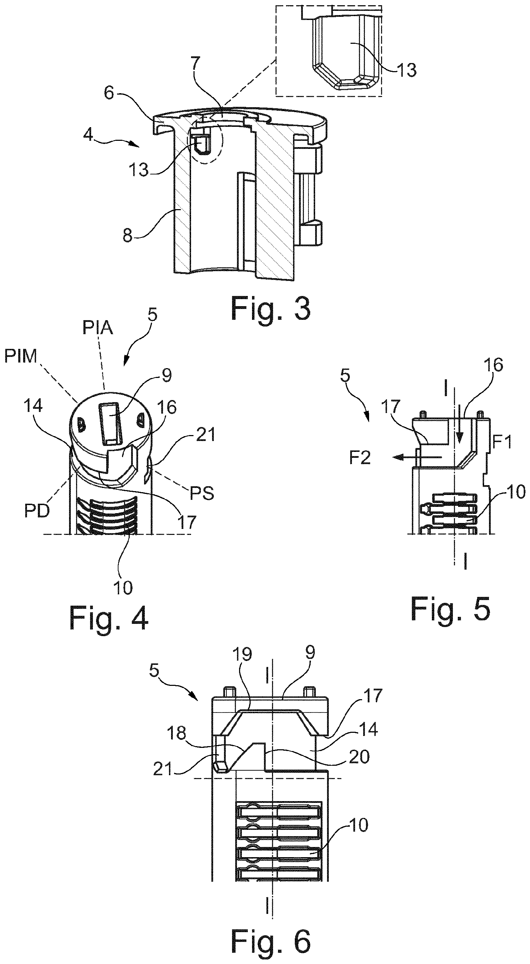

Le verrou 3 comporte en outre un ergot 13 et un profil complémentaire 14, l'un porté par le rotor 5 et l'autre par la tête de stator 4 ainsi qu'un élément élastique 15 (figures 2 et 3).

L'élément élastique 15 est agencé à l'extrémité arrière (ou queue) du rotor 5 et il est configuré pour solliciter axialement le rotor 5 en poussée. L'élément élastique 15 est par exemple un ressort de compression. Il est par exemple interposé entre la came 12 et la queue du rotor 5. L'élément élastique 15 est monté coaxialement entre la came 12 et le rotor 5. Le rotor 5 est ainsi en liaison glissière avec la came 12, c'est-à-dire que le rotor 5 est lié en rotation avec la came 12 mais pas en translation, l'élément élastique 15 repoussant le rotor 5 en position non enfoncée.

Pour faciliter la réalisation du verrou 3, l'ergot 13 est porté par la tête de stator 4 et le profil complémentaire 14 est ménagé dans le rotor 5. Plus précisément, le profil complémentaire 14 est ménagé par exemple du côté de la tête du rotor 5 destinée à recevoir la clé.

L'ergot 13 est donc fixe. Il est par exemple venu de matière avec la tête de stator 4 (figure 3).

Le profil complémentaire 14 est conformé pour que sa coopération avec l'ergot 13 bloque la rotation du rotor 5 dans un sens de rotation prédéterminé à partir d'une position angulaire prédéterminée, et autorise la rotation du rotor 5 par enfoncement préalable du rotor 5.

Par ce moyen, la clé ne peut pas être extraite du verrou 3 par un simple mouvement de retrait en position stop. Il est nécessaire d'enfoncer préalablement la clé dans le verrou 3 pour pouvoir ensuite l'en extraire. On prévient ainsi toute extraction intempestive ou malveillante de la clé, notamment en raison du danger que l'extraction de la clé représente lorsque le véhicule est en marche.

Le profil complémentaire 14 est également conformé pour que la coopération entre le profil complémentaire 14 et l'ergot 13 guide le montage du rotor 5 dans la tête de stator 4 selon un assemblage du type poussé-tourné dans lequel le rotor 5 est axialement retenu dans la tête de stator 4. Bien que retenu dans la tête de stator 4, le rotor 5 peut être enfoncé dans la tête de stator 4. L'assemblage de type poussé-tourné peut aussi être désigné par montage de type baïonnette.

Ainsi, on utilise le même ergot 13 pour deux fonctions distinctes : l'ergot 13 coopère avec le profil complémentaire 14 pour forcer le conducteur à enfoncer le rotor 5 préalablement au retrait de la clé tandis que l'ergot 13 coopère avec le profil complémentaire 14 pour le montage simple du rotor 5 dans la tête de stator 4. On obtient ainsi de façon simple et à moindre coûts, deux fonctionnalités distinctes. En outre, le verrou 3 présente un encombrement réduit par rapport à ceux de l'état de la technique.

Selon un exemple de réalisation visible sur les figures 4 et 5, le profil complémentaire 14 présente une rainure d'entrée 16 s'étendant axialement et débouchant à l'extrémité avant du rotor 5. Le profil complémentaire 14 présente également une rainure latérale en communication avec la rainure d'entrée 16. La rainure latérale commence par s'étendre à l'équerre de la rainure d'entrée 16, par exemple dans le sens de rotation prédéterminé (antihoraire dans l'exemple). Cette forme du profil complémentaire 14 guide le montage du rotor 5 dans la tête de stator 4 selon un assemblage du type poussé-tourné.

Le flanc de la rainure latérale situé du côté de l'avant du rotor 5 présente une butée axiale 17. La butée axiale 17 retient axialement le rotor 5 dans la tête de stator 4 par coopération avec l'ergot 13 tout en permettant l'enfoncement du rotor 5.

La rainure d'entrée 16 est agencée pour coopérer avec l'ergot 13 dans une position angulaire du rotor 5 distincte des positions angulaires que peut prendre le rotor 5 par entraînement en rotation de la clé. Ainsi, on a représenté sur la figure 4, les positions stop PS, intermédiaire accessoires PIA, intermédiaire marche PIM et démarrage PD en référence aux positions angulaires du rotor 5 coopérant avec l'ergot 13 lors de la rotation du rotor 5.

La rainure latérale comporte également une portion conformée en rampe d'enfoncement 18 (figure 6) et dont la pente augmente en direction de la tête du rotor 5 dans un sens de rotation contraire au sens de rotation prédéterminé (désigné par le sens de rotation horaire dans le reste de la description). En concordance, la butée axiale 17 comporte une portion en retrait axial 19 à l'opposé de la portion conformée en rampe d'enfoncement 18. La portion de l'ergot 13 coopérant avec la portion conformée en rampe d'enfoncement 18 du profil complémentaire 14 présente par exemple un profil en biais, de même inclinaison que la pente de la rampe.

Lors de la rotation du rotor 5 dans la tête de stator 4 dans le sens de rotation horaire, la portion conformée en rampe d'enfoncement 18 enfonce axialement le rotor 5 dans la tête de stator 4.

La rainure latérale comporte également une butée radiale 20 (figure 5) pour bloquer la rotation du rotor 5 par coopération avec l'ergot 13, lors de la rotation du rotor 5 dans le sens de rotation antihoraire à partir de la position angulaire prédéterminée. La butée radiale 20 est agencée après la portion conformée en rampe d'enfoncement 18 dans le sens de rotation horaire.

La position angulaire prédéterminée est par exemple une position intermédiaire, telle que la position intermédiaire « accessoires ».

Le profil complémentaire 14 peut également comporter une butée radiale supplémentaire 21, correspondant à la position stop. La coopération entre l'ergot 13 et la butée radiale supplémentaire 21 bloque la rotation du rotor 5 dans le sens de rotation antihoraire. La butée radiale supplémentaire 21 est ainsi par exemple agencée à l'opposé de la rainure d'entrée 16 du profil complémentaire.

En fonctionnement, sur la rainure latérale du profil complémentaire 14, l'ergot 13 est sollicité contre le profil complémentaire 14 par l'élément élastique 15, la rotation du rotor 5 faisant coulisser le rotor 5 dans la tête de stator 4 par la coopération de l'ergot 13 avec le profil complémentaire 14.

On va maintenant décrire un exemple de fonctionnement du verrou en référence aux figures 5 à 15.

Au montage du verrou 3, le rotor 5, est inséré tête première, axialement dans le logement 8 de la tête de stator 4 de manière que l'ergot 13 de la tête de stator 4 s'insère dans la rainure d'entrée 16 du profil complémentaire 14 du rotor 5 (flèche F1 sur la figure 5).

Puis, le rotor 5 est tourné dans la tête de stator 4 de manière que l'ergot 13 coulisse dans la rainure latérale du profil complémentaire 14 (flèche F2). La butée axiale 17 retient alors axialement le rotor 5 dans la tête de stator 4 par coopération avec l'ergot 13. Le rotor 5 est ainsi assemblé dans la tête de stator 4 selon un assemblage du type poussé-tourné.

Le rotor 5 est tourné par exemple jusqu'en position stop, c'est-à-dire jusqu'à ce que l'ergot 13 entre en butée avec la butée radiale supplémentaire 21, à l'extrémité de la rainure latérale du profil complémentaire 14. Puis le verrou 3 est inséré dans le corps d'antivol 2 et solidarisé à ce dernier. L'antivol 1 est ensuite monté sur la colonne de direction du véhicule automobile.

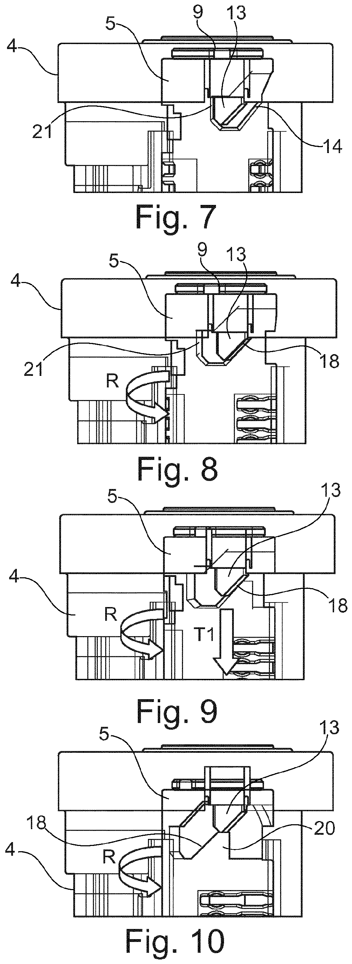

On suppose en référence à la figure 7, que le véhicule est à l'arrêt et que le conducteur introduit la clé dans le rotor 5 pour mettre en marche le véhicule. Le verrou 3 est alors dans la position angulaire stop PS indiqué par la flèche P1 sur la figure 4. L'ergot 13 est en appui contre la butée radiale supplémentaire 21 et contre la butée axiale 17. La rotation du rotor 5 est bloquée dans le sens antihoraire, c'est-à-dire que l'utilisateur ne peut tourner la clé dans le sens de rotation antihoraire au-delà de la position stop. C'est seulement dans cette configuration que la clé peut être introduite dans le verrou 3 ou en être extraite suivant l'axe I-I. Dès que le rotor 5 quitte cette position, l'extraction de la clé est impossible.

Puis, l'utilisateur commence à tourner la clé dans le sens de rotation horaire, faisant tourner le rotor 5 dans la tête de stator 4 selon la flèche R sur la figure 8.

L'ergot 11 entre alors en contact avec la portion conformée en rampe d'enfoncement 18 du profil complémentaire 14 qui enfonce progressivement le rotor 5 axialement dans la tête de stator 4 à l'encontre de son rappel élastique (flèche T1 sur la figure 9).

Au bout d'un méplat à l'extrémité de la portion conformée en rampe d'enfoncement 18, le rotor 5 et donc la butée radiale 20 sont déportés vers l'intérieur du verrou 3, de sorte que la butée radiale 20 n'interdit pas la rotation dans le sens horaire du rotor 5 (figure 10).

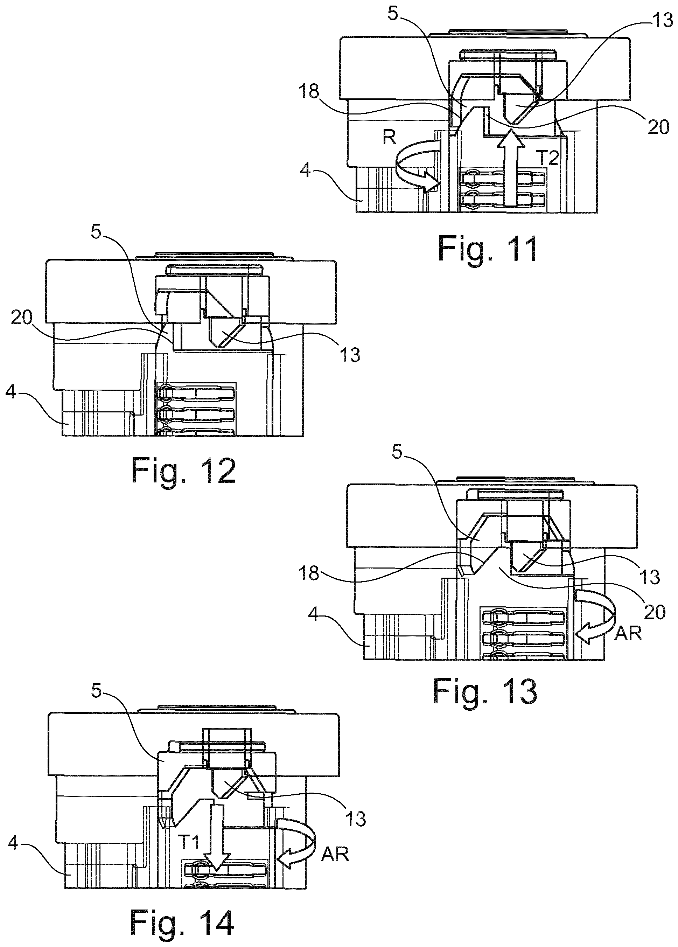

Puis, après le passage de la butée radiale 20, et comme le profil complémentaire 14 ne présente pas d'obstacle, l'élément élastique 15 rappelle le rotor 5 dans sa position initiale non enfoncée (flèche T2 ; figure 11) jusqu'à mise en butée de l'ergot 13 dans la butée axiale 17.

Puis, en supposant que la rotation du rotor 5 s'est poursuivie, le rotor 5 atteint la position intermédiaire « accessoires » PIA (figure 13). Dans cette position ainsi que dans les positions intermédiaire marche PIM et démarrage PD, la butée axiale 17 retient axialement le rotor 5 dans la tête de stator 4 par coopération avec l'ergot 13.

A partir de la position intermédiaire accessoires PIA, lorsque le conducteur tourne la clé en sens inverse (sens de rotation antihoraire), la rotation du rotor 5 est interdite par la mise en butée de l'ergot 13 contre la butée radiale 20 (flèche AR ; figure 13). Il n'est donc pas possible de faire tourner le rotor 5 à partir de la position intermédiaire accessoires PIA pour lui faire regagner la position stop et ôter la clé.

Dans cette position de butée, le conducteur doit alors enfoncer le rotor 5 dans la tête de stator 4 (flèche T1 sur la figure 14), pour déporter la butée radiale 20 vers l'intérieur du verrou 3, permettant le franchissement de la butée radiale 20 (figure 14).

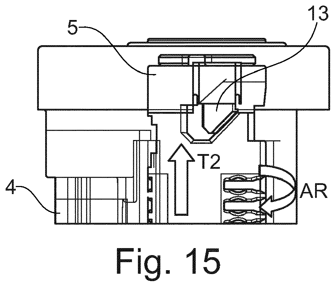

Avant d'atteindre la position stop PS, le rotor 5 retourne en position initiale non enfoncée sous l'effet de l'élément de rappel élastique 13 (flèche T2 ; figure 15) jusqu'à mise en butée de l'ergot 13 dans la butée axiale 17.

Puis le conducteur continue de tourner le rotor 5 jusqu'à la butée radiale supplémentaire 20 pour atteindre la position stop (figure 7). Le conducteur peut alors extraire la clé.

## Revendications

1. Verrou pour antivol de colonne de direction de véhicule automobile comportant :
- un rotor (5),
- une tête de stator (4),
- un ergot (13) et un profil complémentaire (14), l'un porté par le rotor (5) et l'autre par la tête de stator (4), le profil complémentaire (14) étant conformé pour que sa coopération avec l'ergot (13) bloque la rotation du rotor (5) dans un sens de rotation prédéterminé (AR) à partir d'une position angulaire prédéterminée (PIA) et autorise la rotation du rotor (5) par enfoncement préalable du rotor (5),
**caractérisé en ce que** le profil complémentaire (14) est également conformé pour que la coopération entre le profil complémentaire (14) et l'ergot (13) guide le montage du rotor (5) dans la tête de stator (4) selon un assemblage du type poussé-tourné dans lequel le rotor (5) est axialement retenu dans la tête de stator (4).

2. Verrou selon la revendication 1, **caractérisé en ce qu'**il comporte un élément élastique (15) configuré pour solliciter axialement le rotor (5) en poussée.

3. Verrou selon l'une des revendications précédentes, **caractérisé en ce que** l'ergot (13) ou le profil complémentaire (14) est agencé du côté de la tête du rotor (5) destinée à recevoir une clé.

4. Verrou selon l'une des revendications précédentes, **caractérisé en ce que** l'ergot (13) est porté par la tête de stator (4) et **en ce que** le profil complémentaire (14) est porté par le rotor (5).

5. Verrou selon la revendication 4, **caractérisé en ce que** le profil complémentaire (14) présente :
- une rainure d'entrée (16) axiale, débouchant à une extrémité du rotor (5), et
- une rainure latérale en communication avec la rainure d'entrée (16), la rainure latérale présentant une butée axiale (17) pour retenir axialement le rotor (5) dans la tête de stator (4) par coopération avec l'ergot (13).

6. Verrou selon la revendication 5, **caractérisé en ce que** la rainure d'entrée (16) est agencée pour coopérer avec l'ergot (13) dans une position angulaire du rotor (5) distincte des positions angulaires (PS, PIA, PIM, PS) que peut prendre le rotor (5) par entraînement en rotation d'une clé.

7. Verrou selon l'une des revendications 5 ou 6, **caractérisé en ce que** la rainure latérale comporte une portion conformée en rampe d'enfoncement (18) pour enfoncer axialement le rotor (5) dans la tête de stator (4) par coopération avec l'ergot (13) lors de la rotation du rotor (5) dans la tête de stator (4) dans un sens de rotation contraire au sens de rotation prédéterminé (R) et **en ce que** la butée axiale (17) comporte une portion en retrait axial (19) à l'opposé de la portion conformée en rampe d'enfoncement (18).

8. Verrou selon l'une des revendications 5 à 7, **caractérisé en ce que** la rainure latérale comporte une butée radiale (20) pour bloquer la rotation du rotor (5) par coopération avec l'ergot (13), lors de la rotation du rotor (5) dans le sens de rotation prédéterminé (AR) à partir d'une position angulaire prédéterminée (PIA).

9. Verrou selon l'une des revendications précédentes, **caractérisé en ce que** la position angulaire prédéterminée est une position intermédiaire.

## Patentansprüche

1. Verriegelung für eine Lenksäulen-Diebstahlsicherung eines Kraftfahrzeugs, welche umfasst:
- einen Rotor (5),
- einen Stator-Kopf (4),
- einen Führungszapfen (13) und ein ergänzendes Profil (14), eines von dem Rotor (5) getragen und das andere vom Stator-Kopf (4), wobei das ergänzende Profil (14) derart ausgeformt ist, dass sein Zusammenwirken mit dem Führungszapfen (13) die Drehung des Rotors (5) in eine vorbestimmte Richtung (AR) aus einer vorbestimmten Winkelposition (PIA) blockiert und die Drehung des Rotors (5) bei vorherigem Eindrücken des Rotors (5) zulässt,
**dadurch gekennzeichnet, dass** das ergänzende Profil (14) ebenfalls derart ausgeformt ist, dass das Zusammenwirken zwischen dem ergänzenden Profil (14) und dem Führungszapfen (13) den Einbau des Rotors (5) in den Stator-Kopf (4) gemäß einer Zusammenstellung der Art Drücken und Drehen führt, bei der der Rotor (5) axial im Stator-Kopf (4) zurückgehalten wird.

2. Verriegelung nach Anspruch 1, **dadurch gekennzeichnet, dass** sie ein elastisches Element (15) umfasst, das konfiguriert ist, um den Rotor (5) axial auf Schub zu beanspruchen.

3. Verriegelung nach einem der vorstehenden Ansprüche, **dadurch gekennzeichnet, dass** der Führungszapfen (13) oder das ergänzende Profil (14) auf Seiten des Kopfes des Rotors (5) angeordnet ist, der dazu bestimmt ist, einen Schlüssel aufzunehmen.

4. Verriegelung nach einem der vorstehenden Ansprüche, **dadurch gekennzeichnet, dass** der Führungszapfen (13) von dem Stator-Kopf (4) getragen wird und dadurch, dass das ergänzende Profil (14) von dem Rotor (5) getragen wird.

5. Verriegelung nach Anspruch 4, **dadurch gekennzeichnet, dass** das ergänzende Profil (14) aufweist:
- eine axiale Eingangsnut (16), die in ein Ende des Rotors (5) mündet, und
- eine laterale Nut in Verbindung mit der Eingangsnut (16), wobei die laterale Nut einen axialen Anschlag (17) aufweist, um den Rotor (5) durch Zusammenwirken mit dem Führungszapfen (13) axial in dem Stator-Kopf (4) zurückzuhalten.

6. Verriegelung nach Anspruch 5, **dadurch gekennzeichnet, dass** die Eingangsnut (16) angeordnet ist, um mit dem Führungszapfen (13) in einer Winkelposition des Rotors (5) zusammenzuwirken, die sich von den Winkelpositionen (PS, PIA, PIM, PS) unterscheidet, die der Rotor (5) durch ein Verdrehen des Schlüssels einnehmen kann.

7. Verriegelung nach einem der Ansprüche 5 oder 6, **dadurch gekennzeichnet, dass** die laterale Nut einen Abschnitt umfasst, der derart als Eindrückrampe (18) ausgeformt ist, um den Rotor (5) durch Zusammenwirken mit dem Führungszapfen (13) beim Drehen des Rotors (5) in den Stator-Kopf (4) in eine entgegengesetzte Drehrichtung zur vorbestimmten Drehrichtung (R) axial in den Stator-Kopf (4) einzudrücken, und dadurch, dass der axiale Anschlag (17) einen Abschnitt mit einer axialen Ausnehmung (19) gegenüber dem Abschnitt umfasst, der als Eindrückrampe (18) ausgeformt ist.

8. Verriegelung nach einem der Ansprüche 5 bis 7, **dadurch gekennzeichnet, dass** die laterale Nut einen radialen Anschlag (20) umfasst, um die Drehung des Rotors (5) durch Zusammenwirken mit dem Führungszapfen (13) beim Drehen des Rotors (5) in die vorbestimmte Richtung (AR) aus einer vorbestimmten Winkelposition (PIA) zu blockieren.

9. Verriegelung nach einem der vorstehenden Ansprüche, **dadurch gekennzeichnet, dass** die vorbestimmte Winkelposition eine Zwischenposition ist.

## Claims

1. A lock for an antitheft of a motor vehicle steering column including:
- a rotor (5),
- a stator head (4),
- a lug (13) and a complementary profile (14), one carried by the rotor (5) and the other carried by the stator head (4), the complementary profile (14) being shaped so that its cooperation with the lug (13) blocks the rotation of the rotor (5) in a predetermined direction of rotation (AR) from a predetermined angular position (PIA) and authorizes the rotation of the rotor (5) by prior depression of the rotor (5),
**characterized in that** the complementary profile (14) is also shaped so that the cooperation between the complementary profile (14) and the lug (13) guides the mounting of the rotor (5) in the stator head (4) according to a pushed-turned type assembly in which the rotor (5) is axially retained in the stator head (4).

2. The lock according to claim 1, **characterized in that** it includes a resilient element (15) configured to axially thrust-bias the rotor (5).

3. The lock according to any of the preceding claims, **characterized in that** the lug (13) or the complementary profile (14) is arranged on the side of the head of the rotor (5) intended to receive a key.

4. The lock according to any of the preceding claims, **characterized in that** the lug (13) is carried by the stator head (4) and **in that** the complementary profile (14) is carried by the rotor (5).

5. The lock according to claim 4, **characterized in that** the complementary profile (14) has:
- an axial inlet groove (16), opening at one end of the rotor (5), and
- a lateral groove in communication with the inlet groove (16), the lateral groove having an axial stop (17) for axially retaining the rotor (5) in the stator head (4) by cooperation with the lug (13).

6. The lock according to claim 5, **characterized in that** the inlet groove (16) is arranged to cooperate with the lug (13) in an angular position of the rotor (5) distinct from the angular positions (PS, PIA, PIM, PS) that the rotor (5) can take by driving in rotation of a key.

7. The lock according to any of claims 5 or 6, **characterized in that** the lateral groove includes a portion shaped as a depression ramp (18) for axially depressing the rotor (5) into the stator head (4) by cooperation with the lug (13) during the rotation of the rotor (5) in the stator head (4) in a direction of rotation opposite to the predetermined direction of rotation (R) and **in that** the axial stop (17) includes an axially recessed portion (19) opposite the portion shaped as a depression ramp (18).

8. The lock according to any of claims 5 to 7, **characterized in that** the lateral groove includes a radial stop (20) to block the rotation of the rotor (5) by cooperation with the lug (13) during the rotation of the rotor (5) in the predetermined direction of rotation (AR) from a predetermined angular position (PIA).

9. The lock according to any of the preceding claims, **characterized in that** the predetermined angular position is an intermediate position.
